# EUROPÄISCHE PATENTANMELDUNG

(11) **EP 1 884 388 A2**
(43) Veröffentlichungstag der Anmeldung: **06.02.2008**
(21) Anmeldenummer: 07014027.2
(22) Anmeldetag: 18.07.2007
(51) Int. Cl.: B60J 7/20

(54) **Cabriolet-Fahrzeug mit einem Deckelteil für den Dachablageraum**

(30) Priorität: 31.07.2006 DE 102006035519
(71) Anmelder: Wilhelm Karmann GmbH, 49084 Osnabrück (DE)
(72) Erfinder: Böhnke, Achim, 49545 Tecklenburg (DE); Selle, Heinrich, 32549 Bad Oeynhausen (DE)

(57) **Zusammenfassung**

Ein Cabriolet-Fahrzeug (1) mit einem im hinteren Fahrzeugbereich ablegbaren Dach (2), wobei zur zumindest teilweisen Abdeckung des Dachablageraums ein Deckelteil (8) vorgesehen ist, das einen Hauptteil (9) und eine gegenüber diesem nach vorne verlagerbare Erweiterung (10) umfaßt,
wobei die Erweiterung (10) einen bezüglich der Fahrzeugquerrichtung mittleren Abschnitt (14) und gegenüber diesem zwischen einer zumindest nahezu fluchtenden und einer breitenverminderten Öffnungsstellung bewegliche Seitenteile (15) umfaßt, wird so ausgebildet, daß die Seitenteile (15) gegenüber dem mittleren Abschnitt (14) im Öffnungssinn vorgespannt sind und bei Verlagerung der Erweiterung (10) nach vorne durch mittelbaren oder unmittelbaren Kontakt mit dem Deckelteil (8) zwangsweise im fluchtenden Sinn beaufschlagbar sind (Fig. 4).

## Beschreibung

Die Erfindung betrifft ein Cabriolet-Fahrzeug mit einem in Öffnungsstellung in einem Dachablageraum halterbaren Dach, wobei zur zumindest teilweisen Abdeckung des Dachablageraums ein Deckelteil vorgesehen ist, nach dem Oberbegriff des Anspruchs 1.

Es ist bekannt, Cabriolet-Fahrzeuge mit einem Deckelteil für den Dachablageraum zu versehen, wobei das Deckelteil einen gegenüber der Fahrzeugkarosserie beweglichen Hauptteil und eine zugeordnete Erweiterung umfaßt, die an dem Hauptteil ein- und auswärts beweglich gehalten ist und in einwärts verlagerter Speicherstellung zum Beispiel den Durchtritt des Daches und/oder die geschlossene Dachstellung ermöglicht. In geöffneter Dachstellung liegt die Erweiterung nach Art einer Hutablage in etwa fluchtend zur Oberseite des Hauptteils vor diesem und erweitert somit die Abdeckfläche des Deckelteils.

Sofern die Erweiterung in fluchtender Stellung zumindest nahezu die ganze Querbreite des Hauptteils nach vorne fortsetzen soll, ist es bei der üblichen Verjüngung der Karosserie nach hinten hin häufig erforderlich, die Erweiterung über ihre Quererstreckung zu teilen und außen liegende Seitenteile gegenüber einem mittleren Abschnitt einwärts verlagern zu können und die Breite der Erweiterung für die Verlagerung in die Speicherstellung unterhalb des Hauptteils zu verringern. Dabei soll die Verlagerung der Seitenteile gegenüber dem mittleren Abschnitt mit möglichst wenig Aufwand und wenig Raumbedarf für eventuelle Antriebe bewirkbar sein.

Hierzu ist es bekannt, das Ausschwenken von Seitenteilen in ihre fluchtende Lage über eine Abstützung an einem Widerlager der Karosserie zu bewirken. Ein solches Fahrzeug ist in der EP 1 197 368 B1 gezeigt. Da das Deckelteil jedoch nach seiner Herstellung an den Rohbau der Karosserie eingesetzt wird, erfordert ein derartiges Zusammenspiel aufgrund der Toleranzen intensive Justierungsarbeiten, die auch während des laufenden Betriebs aufgrund von Materialalterung, thermischen Ausdehnungen oder anderen Einflüssen u. U. wiederholt werden müssen, oder es kommt nicht zu einer wirklich zufriedenstellenden fluchtenden Lage der Seitenteile, so daß diese dann auch in geschlossener Stellung stets leicht schräg zum mittleren Abschnitt stehen, wodurch die Optik beeinträchtigt ist.

Der Erfindung liegt das Problem zugrunde, eine einfache, einfach justierbare und zuverlässige Bewegungsmöglichkeit für die Seitenteile gegenüber dem mittleren Abschnitt der Erweiterung zu schaffen.

Die Erfindung löst dieses Problem durch ein Cabriolet-Fahrzeug mit den Merkmalen des Anspruchs 1. Hinsichtlich vorteilhafter Ausgestaltungen der Erfindung wird auf die weiteren Ansprüche 2 bis 10 verwiesen.

Mit der Erfindung ist eine Justage der Seitenteile zum mittleren Abschnitt ohne Beeinflussung durch die Karosserie möglich, das Deckelteil kann vor seinem Einbau in den Rohbau modular gefertigt und auf Funktion getestet werden. Auch eine Nachjustage ist an dem isolierten Deckelteil möglich, ohne daß die Karosserie benötigt würde. Dennoch ist für die Bewegung der Seitenteile kein eigener Antrieb erforderlich, so daß die Kofferraumbeeinträchtigung durch das Deckelteil minimiert ist. Für eine Bewegungsrichtung der Seitenteile ist eine Abstützung am Deckelteil maßgeblich, die Rückbewegung kann allein durch Federkraft bewirkbar sein, so daß eine maximale Einfachheit der Bewegung erreicht ist. Ein eigener Antrieb für die Bewegung der Seitenteil gegenüber dem mittleren Abschnitt ist entbehrlich.

Sofern die Seitenteile gegenüber dem mittleren Abschnitt einschwenkbar sind und in Öffnungsstellung abgewinkelt zu diesem stehen, kann der mittlere Abschnitt gegenüber dem Hauptteil eingeschwenkt werden, wobei dann die Seitenteile entsprechend der zu den Seiten abfallenden Wölbung des Hauptteils raumsparend nach unten weisen und dabei eng an dem Hauptteil anliegen können.

Vorteilhaft greifen die Seitenteile zur Überführung in die fluchtende Stellung von unten unter Randbereiche des Deckelteils, wodurch der zugehörige Mechanismus optisch verdeckt ist.

Für eine dauerhaft zuverlässige Funktion können die Seitenteile jeweils mit einem Ausleger versehen sein, der bei Übergang in die fluchtende Stellung unter einen Randbereich des Deckelteils greift. Der Ausleger selbst ist hinreichend lang, daß Fertigungstoleranzen unerheblich sind. Lediglich für die korrekte Höheneinstellung der Seitenteil zum mittleren Abschnitt können diese eine Rolle spielen.

Für einen Ausgleich eventueller Toleranzen in der Höhe sowie für eine klapperfreie Funktion kann günstig der Ausleger mit einem elastischen Kopfbereich versehen ist.

Zusätzlich oder alternativ ist auch eine Höheneinstellbarkeit des Kopfbereichs möglich. Auch damit ist die Feineinstellung am Deckelteil vor seiner Montage möglich. Da Hauptteil und Seitenteile aus dem gleichen Material bestehen können, sind im laufenden Betrieb keine unterschiedlichen thermischen Ausdehnungen zu erwarten.

Sofern daß das Fahrzeug ein Dach mit bei seiner Öffnung eindrehbaren C-Säulen aufweist, können diese nach ihrem Eindrehen während der Dachöffnung bei geöffnetem Dach oberhalb der Heckscheibe liegen, so daß das Maß des abgelegten Dachpakets nach unten nicht vergrößert ist. Insbesondere können die C-Säulen in den Hohlraum zwischen gegenläufig gewölbten Dachteilen einschwenkbar sein. Das Dachpaket ist deutlich schmaler gegenüber festen C-Säulen, wodurch der Ablageraum des Daches verschmälert und die Randfuge des Deckelteils erheblich zur Fahrzeugmitte hin rücken kann, was die Designmöglichkeiten am Fahrzeug verbessert. Gleichzeitig ist das Paket der abgelegten Dachteile auch flacher, wodurch auch das Fahrzeugheck in optisch angenehmerem, flacherem Design ausgeführt sein kann.

Weitere Vorteile und Merkmale der Erfindung ergeben sich aus einem in der Zeichnung schematisch dargestellten und nachfolgend beschriebenen Ausführungsbeispiel des Gegenstandes der Erfindung.

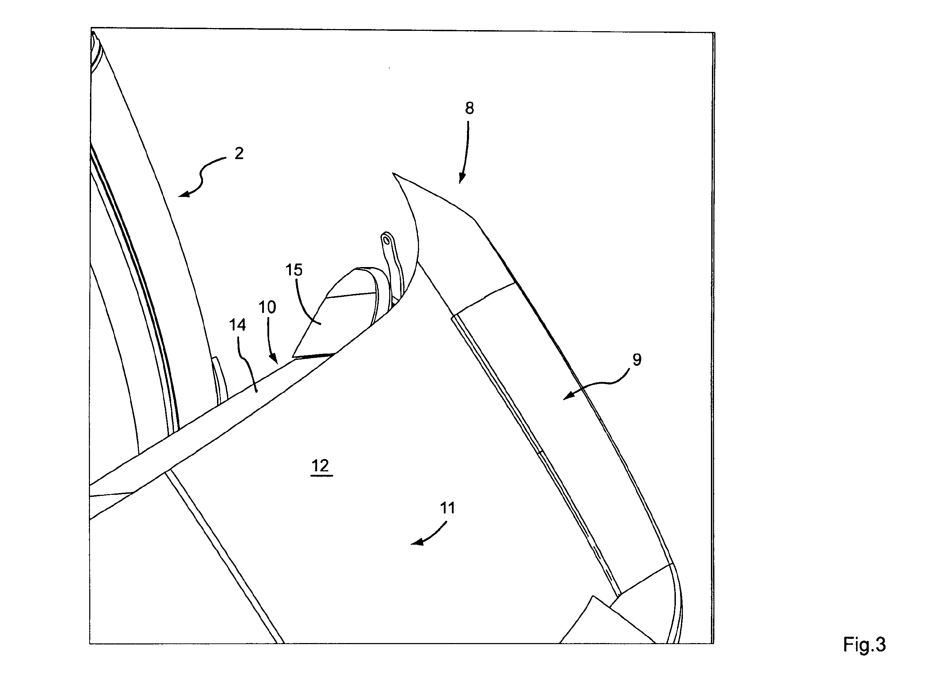

In der Zeichnung zeigt:
- Fig. 1: eine perspektivische, nach vorne und unten abgebrochene Ansicht des Heckbereichs eines schematisch angedeuteten erfindungsgemäßen Cabriolet-Fahrzeugs von schräg hinten bei geschlossenem Dach,
- Fig. 2: eine ähnliche Ansicht wie Fig. 1 bei geöffnetem Dach, das in einem von einem Deckelteil abgedeckten Ablageraum aufgenommen ist, wobei eine Erweiterung gegenüber einem Hauptteil des Deckelteils auswärts verlagert ist,
- Fig. 3: bis Figur 7 den Ablauf des Ausschwenkens der Erweiterung während der Dachöffnung zwischen Figur 1 und Figur 2 in schematischer Darstellung des Deckelteils aus ähnlicher Perspektive wie Fig. 2,
darin
- Fig. 3: Das Ausschwenken der Erweiterung bei noch gegenüber dem mittleren Abschnitt eingeschwenkten Seitenteilen,

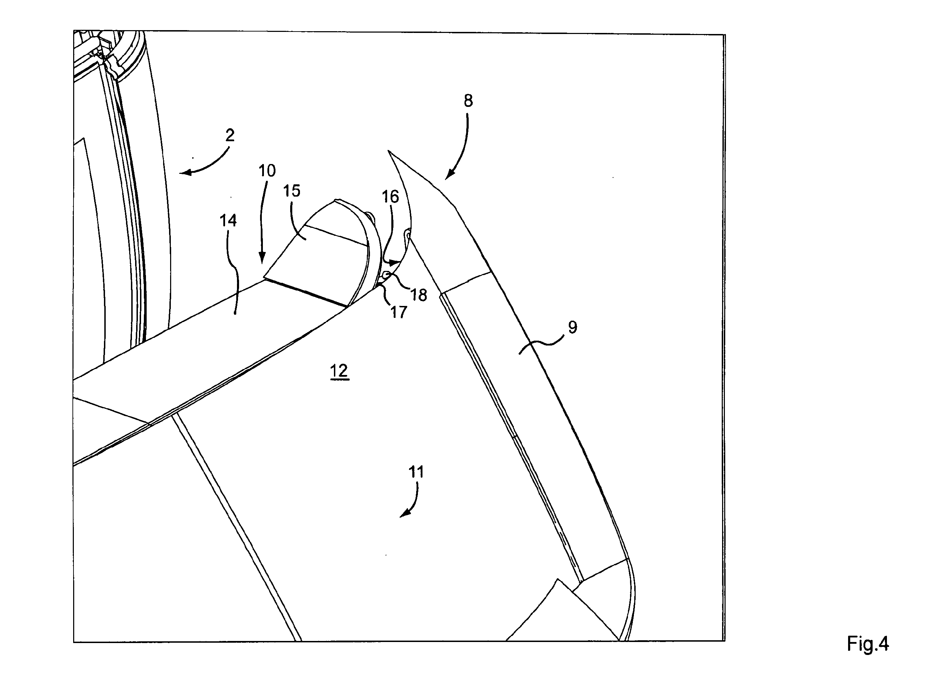

- Fig. 4: das weitere Ausschwenken der Erweiterung vor Kontakt des Auslegers des Seitenteils mit dem Hauptteil,

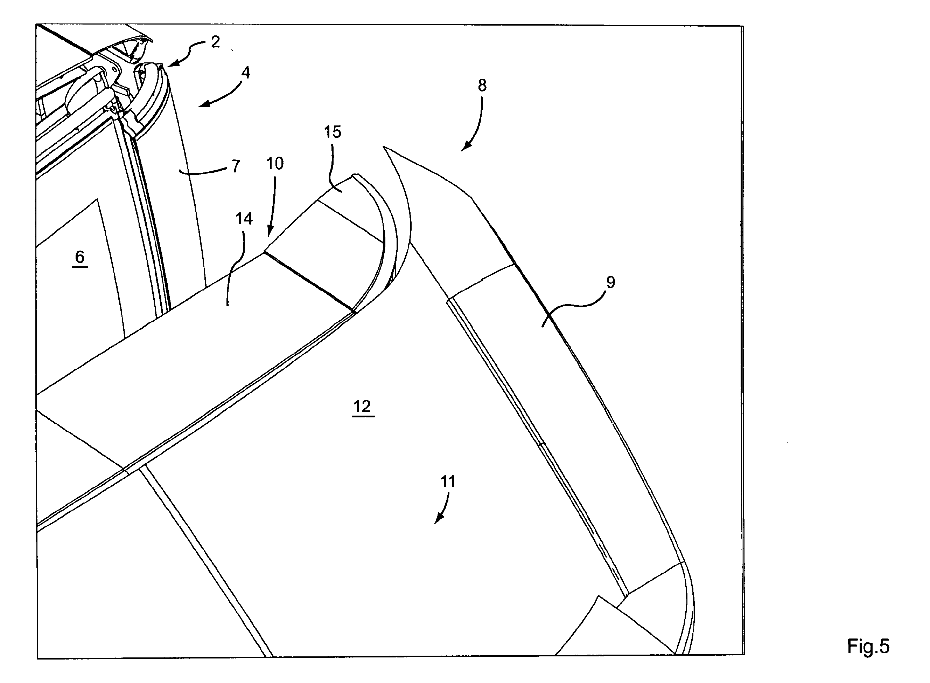

- Fig. 5: eine ähnliche Ansicht wie Fig. 4 bei weiterem Schwenken des mittleren Abschnitts und nach Kontakt des Auslegers mit dem Hauptteil und daraus resultierender Kraftbeaufschlagung des Seitenteils im fluchtenden Sinnne,

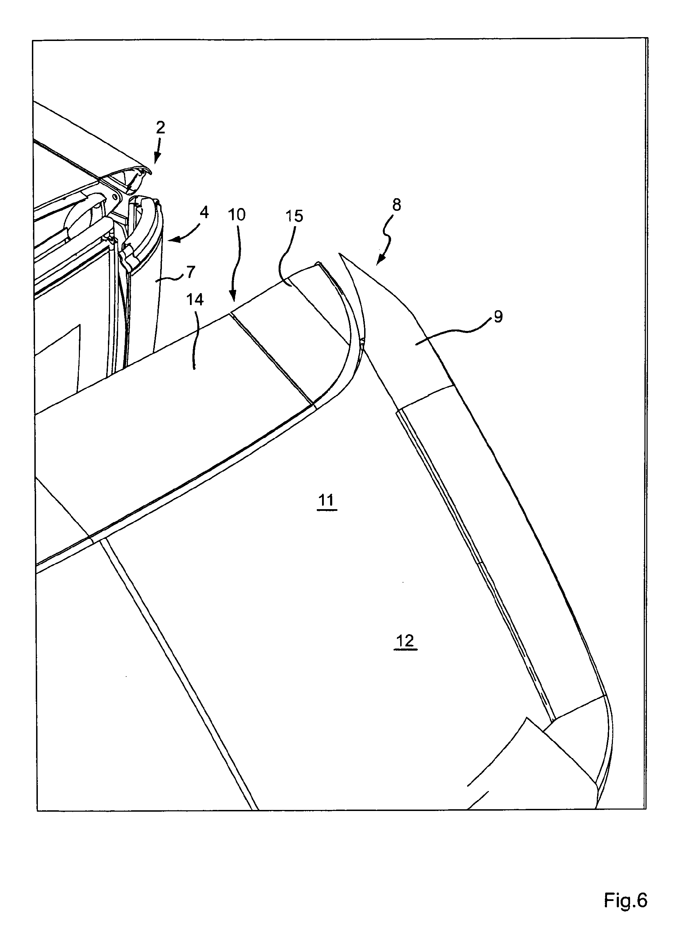

- Fig. 6: eine ähnliche Ansicht wie Fig. 5 bei weiter fortschreitender Bewegung des Deckelteils,

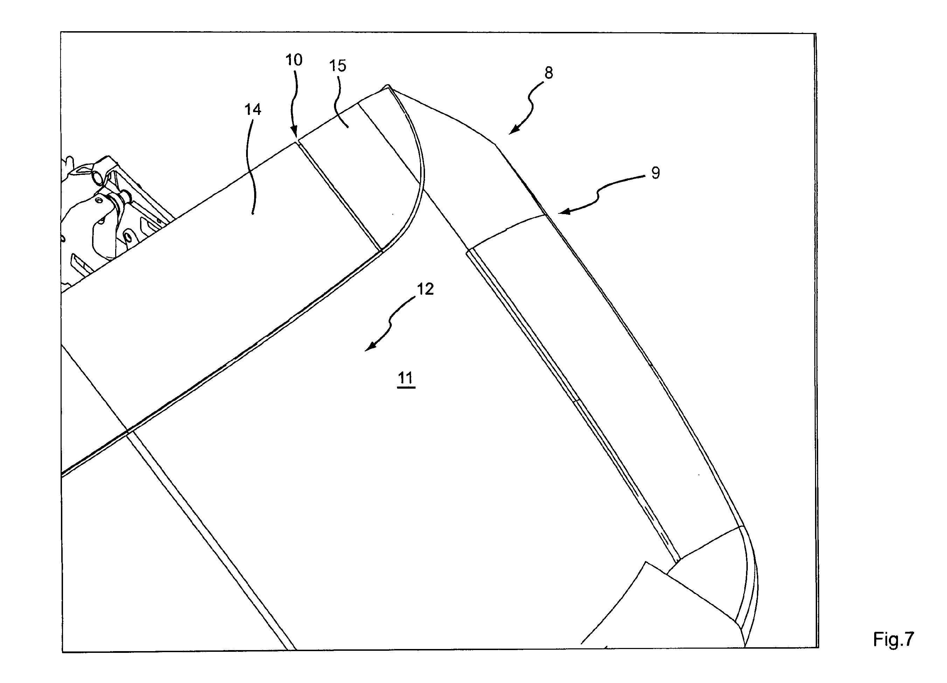

- Fig. 7: eine ähnliche Ansicht wie Fig. 6 bei vollständig auswärts verlagertem Deckelteil mitfluchtend liegenden Seitenteilen,

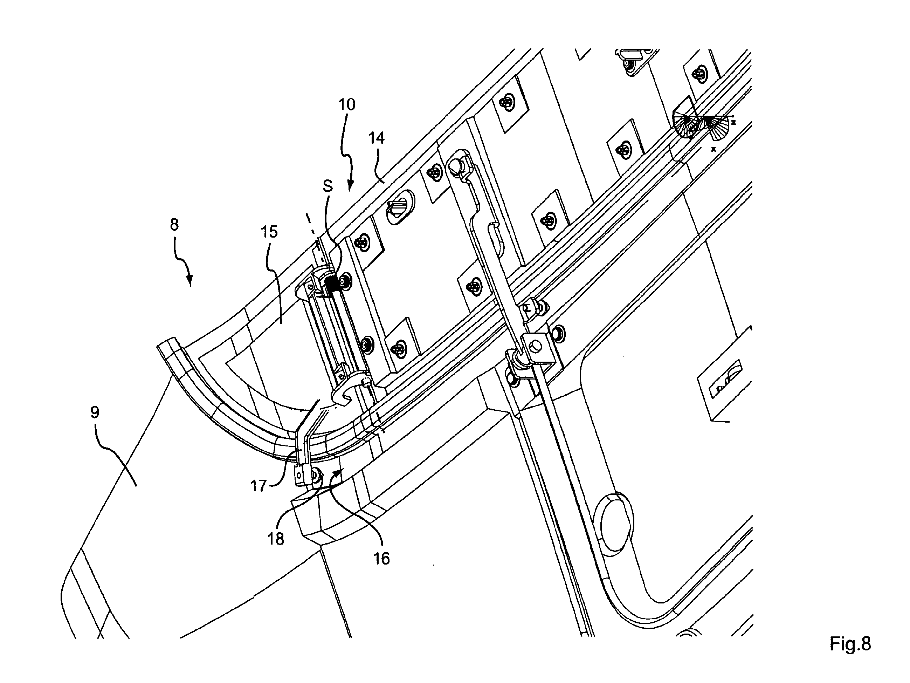

- Fig. 8: eine perspektivische Ansicht von schräg unten auf den vorderen rechten Randbereich des Deckelteils mit unter den Hauptteil greifendem Ausleger des Seitenteils in dessen zum mittleren Abschnitt fluchtender Stellung,

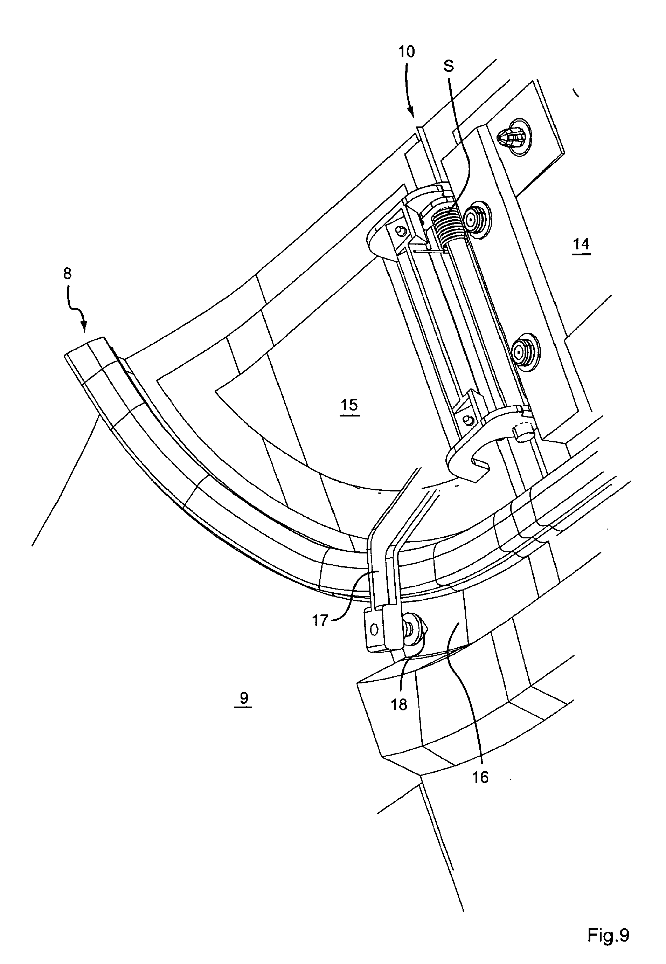

- Fig. 9: eine Detailansicht der Verhältnisse nach Figur 8 aus geänderter Perspektive,

Das in der Zeichnung dargestellte erfindungsgemäße Cabriolet-Fahrzeug 1 umfaßt ein Dach 2, das im geöffneten Zustand im hinteren Bereich der Karosserie 3 des Fahrzeugs 1 in einem Dachablageraum ablegbar ist. Das Dach 2 kann mit festen Dachteilen als sog. Retractable Hardtop (RHT) ausgebildet sein. Auch für beispielsweise Softtops oder kombinierte Dächer ist die Erfindung vorteilhaft einsetzbar.

Das erfindungsgemäße Cabriolet-Fahrzeug 1 kann sowohl ein Zweisitzer sein als auch einen größeren Insassenraum mit zwei oder sogar mehr Sitzreihen hintereinander umfassen. Die Erfindung ist sowohl bei Fahrzeugen mit manuell zu bewegenden Dächern auch insbesondere bei voll- oder teilautomatischer Beweglichkeit des Daches 2 anwendbar.

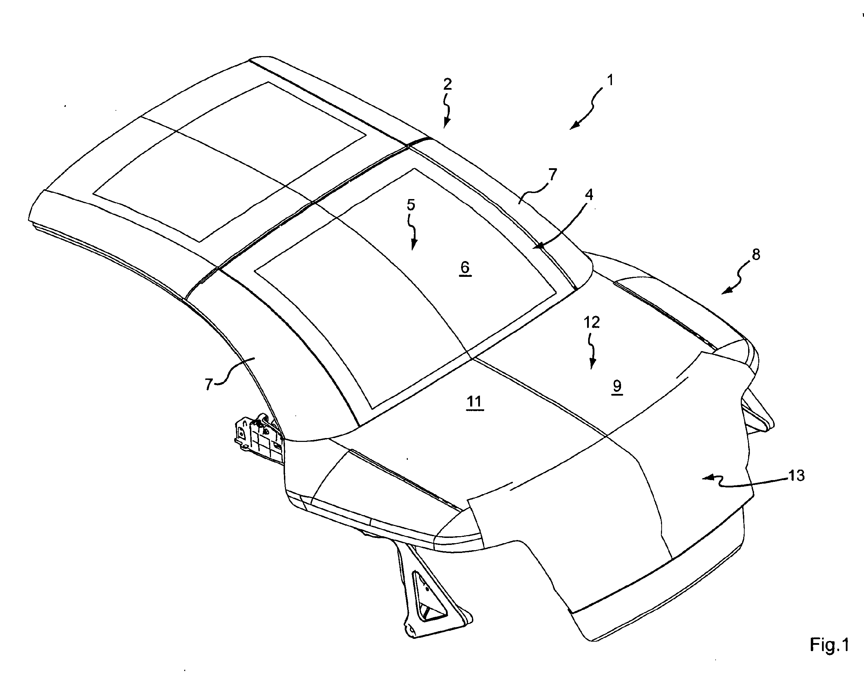

Bei dem in Figur 1 dargestellten Fahrzeug 1 ist ein RHT mit einem hinteren Dachabschnitt 4 vorgesehen, der im bezüglich der Fahrzeugquerrichtung mittleren Bereich 5 eine Heckscheibe 6 und seitlich außen gegenüber dieser separat bewegliche C-Säulen 7 umfaßt.

Die C-Säulen 7 sind hier bei der Dachöffnung gegenüber dem mittleren Abschnitt 5 mit der Heckscheibe 6 des Dachabschnitts 4 einschwenkbar, wodurch sich eine schmale und dennoch flache Ablagemöglichkeit des Daches 2 ergibt.

Zur Dachöffnung ist der hintere Dachabschnitt 4 um eine horizontale und quer zum Fahrzeug 1 liegende erste Schwenkachse heckwärts und abwärts verlagerbar und ein vorgeordneter Dachabschnitt an den hinteren heranschwenkbar.

Während der Dachöffnungs- oder -schließbewegung ist ein Deckelteil 8, das den Ablageraum des Daches 2 in dessen geöffneter Stellung abdeckt, um eine hintere Querachse aufgeschwenkt (Fig. 3 bis Fig. 7).

Das Deckelteil 8, das zumindest bei geöffnetem Dach 2 den Ablageraum vollständig abdeckt, ist mehrteilig ausgebildet und umfaßt in seinem hinteren Bereich einen Hauptteil 9, der beweglich an der Karosserie 3 gehalten ist, und im vorderen Bereich eine relativ großflächige Erweiterung 10, die gegenüber dem Hauptteil 9 ein- und auswärts verlagerbar ist. Diese Erweiterung 10 kann eine erhebliche Erstreckung von mehreren zehn Zentimetern in Fahrzeuglängsrichtung haben. Der Hauptteil 9 ist in Seitenansicht L-förmig gewinkelt und umfaßt einen in geschlossener Stellung im wesentlichen horizontal liegenden oberen Abschnitt 12 sowie einen im wesentlichen vertikal stehenden hinteren Abschnitt 13.

Weiter ist die Erweiterung 10 selbst ebenfalls mehrteilig ausgebildet und bezüglich der Fahrzeugquerrichtung in einen mittleren Abschnitt 14 und gegenüber diesem bewegliche Seitenteile 15 geteilt.

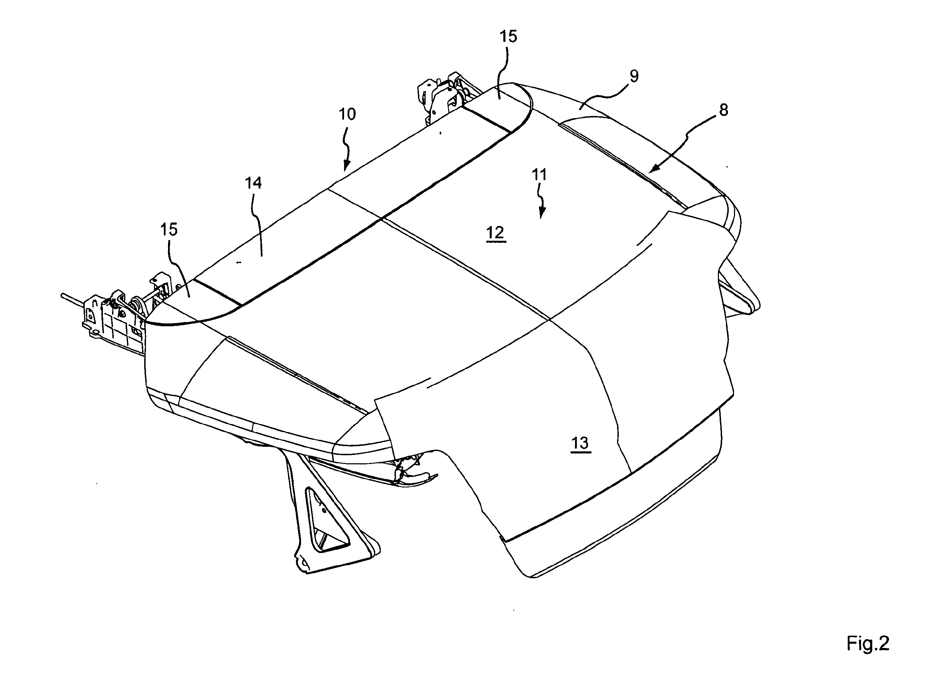

Die Erweiterung 10 ist bei abgelegtem Dach 2 über diesem in gegenüber dem Hauptteil 9 auswärts verlagerter Stellung (Fig. 2) zu einer Oberseite 11 des Abschnitts 12 des Hauptteils 9 zumindest nahezu fluchtend nach Art einer Hutablage gehalten. In der fluchtenden Stellung der Erweiterung 10 liegen auch die Seitenteile 15 fluchtend zum mittleren Abschnitt 14. Für die Dachöffnung sind die Seitenteile 15 hingegen derart gegen den mittleren Abschnitt 14 einwärts verlagerbar, daß sich die Breite der Erweiterung 10 insgesamt verringert.

Die Seitenteile 15 sind hier jeweils mit zumindest einem nach schräg hinten weisenden Ausleger 17 versehen, der bei Übergang in die fluchtende Stellung von unten unter einen Randbereich 16 des Hauptteils 9 greift.

Der Ausleger 17 ist an der Kontaktfläche zum Randbereich 16 mit einem elastischen Kopfbereich 18 versehen. Dieser umfaßt zum Beispiel einen Gummipuffer. Zusätzlich kann der Kopfbereich auch in seiner Höhenlage einstellbar sein, wodurch der Preßdruck des Kopfbereichs 18 am Hauptteil 9 variiert werden kann.

Die Seitenteile 15 sind - zum Beispiel über um deren Schwenkachsen gelegte Spiralfedern S - gegenüber dem mittleren Abschnitt 14 im Öffnungssinn vorgespannt. Durch den mittelbaren oder unmittelbaren Kontakt, hier über die Ausleger 17, mit dem Deckelteil 8, sind sie allein durch die Schwenkbewegung des mittleren Abschnitts 14 zwangsweise im fluchtenden Sinn beaufschlagbar.

Für das Dachschließen wird das Deckelteil 8 aufgeschwenkt und die Erweiterung gegenüber dem Hauptteil 9 nach unten verlagert, hier um eine quer zum Fahrzeug 1 liegende Achse eingeschwenkt. Bei diesem Einschwenken verringern die Ausleger 17 nach und nach die Kraftbeaufschlagung durch den Hauptteil 9, bis schließlich der Kontakt zu diesm verloren geht. Eine Federbeaufschlagung kann dadurch die Seitenteile 15 in eine gegenüber dem mittleren Abschnitt 14 abgewinkelte Stellung nach oben schwenken lassen. Die Bewegung endet bei vollständigem Lösen des Kontakts der Ausleger 17, zum Beispiel durch Begrenzung mittels eines Anschlags. Bei dem Lösen des Kontakts der Ausleger 17 weist der mittlere Abschnitt 14 schräg nach unten. Die Seitenteile 15 stehen dabei zur Oberfläche schräg nach oben weisend. Durch das Einschwenken der Erweiterung 10 um die Querachse unter den Hauptteil 9 gelangen die Seitenteile 15 dann in eine um einen stumpfen Winkel abgewinkelte Ausrichtung, die gegenüber einer Horizontalen nach unten weist. Dabei sind sie an die seitlich abfallende Wölbung des oberen Abschnitts 12 des Hauptteils 9 angepaßt gehalten.

Zur Dachöffnung hingegen gelangen durch das Ausschwenken des mittleren Abschnitts 14 der Erweiterung 10 um die Querachse gegenüber dem Hauptteil 9 die Ausleger 17 mit ihren Kopfbereichen 18 zwangsweise unter den Randbereich 16 des Hauptteils 9. Bei Fortführen des Schwenkens des mittleren Abschnitts 14 werden daher die Seitenteile 15 mit Kraft relativ zum mittleren Abschnitt 14 beaufschlagt. Allein durch das Schwenken des mittleren Abschnitts 14 schwenken somit die Seitenteile 15 gegenüber diesem zwangsweise gegen die Federkraft aus.

Die Bewegung der Seitenteile 15 zum mittleren Abschnitt 14 ist somit in beide Richtungen ohne eigenen Antrieb bewirkbar.

Das gesamte mehrteilige Deckelteil 8 kann vor Einbau in den Rohbau auf Funktion getestet und justiert werden; die so fertig eingestellte modulare Einheit kann dann an den Rohbau angeliefert und montiert werden, ohne daß für die korrekte Funktion dann noch Nacharbeiten erforderlich sind. Alle Einstellungen für die Relativbewegung der Seitenteile 15 können am Deckelteil 8 unabhängig von seinem Einbau vorgenommen werden.

## Patentansprüche

1. Cabriolet-Fahrzeug (1) mit einem im hinteren Fahrzeugbereich ablegbaren Dach (2), wobei zur zumindest teilweisen Abdeckung des Dachablageraums ein Deckelteil (8) vorgesehen ist, das einen Hauptteil (9) und eine gegenüber diesem nach vorne verlagerbare Erweiterung (10) umfaßt, wobei die Erweiterung (10) einen bezüglich der Fahrzeugquerrichtung mittleren Abschnitt (14) und gegenüber diesem zwischen einer zumindest nahezu fluchtenden und einer breitenverminderten Öffnungsstellung bewegliche Seitenteile (15) umfaßt,
**dadurch gekennzeichnet,**
**daß** die Seitenteile (15) gegenüber dem mittleren Abschnitt (14) im Öffnungssinn vorgespannt sind und bei Verlagerung der Erweiterung (10) nach vorne durch mittelbaren oder unmittelbaren Kontakt mit dem Deckelteil (8) zwangsweise im fluchtenden Sinn beaufschlagbar sind.

2. Cabriolet-Fahrzeug (1) nach Anspruch 1,
**dadurch gekennzeichnet,**
**daß** die Seitenteile (15) gegenüber dem mittleren Abschnitt (14) einschwenkbar sind und in Öffnungsstellung abgewinkelt zu diesem stehen.

3. Cabriolet-Fahrzeug (1) nach einem der Ansprüche 1 oder 2,
**dadurch gekennzeichnet,**
**daß** die Seitenteile (15) zur Überführung in die fluchtende Stellung von unten unter Randbereiche (16) des Deckelteils (8) greifen.

4. Cabriolet-Fahrzeug (1) nach Anspruch 3,
**dadurch gekennzeichnet,**
**daß** die Seitenteile (15) jeweils mit einem Ausleger (17) versehen sind, der bei Übergang in die fluchtende Stellung unter den Randbereich (16) des Deckelteils (8) greift.

5. Cabriolet-Fahrzeug (1) nach einem der Ansprüche 3 oder 4,
**dadurch gekennzeichnet,**
**daß** der zu untergreifende Randbereich (16) dem Hauptteil (9) zugeordnet ist.

6. Cabriolet-Fahrzeug (1) nach einem der Ansprüche 3 bis 5,
**dadurch gekennzeichnet,**
**daß** der Ausleger (17) mit einem elastischen Kopfbereich (18) versehen ist.

7. Cabriolet-Fahrzeug (1) nach einem der Ansprüche 3 bis 6,
**dadurch gekennzeichnet,**
**daß** der Ausleger (17) mit einem höheneinstellbaren Kopfbereich (18) versehen ist.

8. Cabriolet-Fahrzeug (1) nach einem der Ansprüche 1 bis 7,
**dadurch gekennzeichnet,**
**daß** die Erweiterung (10) gegenüber dem Deckelteil (8) um eine Querachse über Kopf einschwenkbar ist und in der eingeschwenkten Stellung die Seitenteile (15) mit einer abwärtsgerichteten Komponente gegenüber dem mittleren Abschnitt (14) abgewinkelt stehen.

9. Cabriolet-Fahrzeug (1) nach einem der Ansprüche 1 bis 8,
**dadurch gekennzeichnet,**
**daß** die Bewegung der Seitenteile (15) zum mittleren Abschnitt (14) ohne eigenen Antrieb bewirkbar ist.

10. Cabriolet-Fahrzeug (1) nach einem der Ansprüche 1 bis 9,
**dadurch gekennzeichnet,**
**daß** das Fahrzeug (1) ein Dach (2) mit bei Öffnung eindrehbaren C-Säulen aufweist.
